# EUROPEAN PATENT SPECIFICATION

(11) **EP 4 395 903 B1**
(45) Date of publication and mention of the grant of the patent: **01.10.2025**
(21) Application number: 22772818.5
(22) Date of filing: 30.08.2022
(51) Int. Cl.: A63F 13/213, A63F 13/65, A63F 13/56

(54) **SYSTEM AND METHOD FOR AUGMENTED REALITY FOR A MOVEABLE REAL-WORLD OBJECT**
SYSTEM UND VERFAHREN FÜR ERWEITERTE REALITÄT FÜR EIN BEWEGLICHES OBJEKT DER REALEN WELT
SYSTÈME ET PROCÉDÉ DE RÉALITÉ AUGMENTÉE POUR UN OBJET MOBILE DU MONDE RÉEL

(30) Priority: 30.08.2021 DK PA202170432
(43) Date of publication of application: 10.07.2024
(73) Proprietor: LEGO A/S, 7190 Billund (DK)
(72) Inventor: LOVATT, Fraser, 7190 Billund (DK); NGUYEN, Minh Thanh, 7190 Billund (DK); MOURITSEN, Simone Boye, 7190 Billund (DK); LINDHOLM, Rasmus, 7190 Billund (DK)
(74) Representative: Guardian IP Consulting I/S
(86) International application number: PCT/EP2022/074019
(87) International publication number: WO 2023/031155

(56) References cited:
- WO-A1-2014/035640
- US-A1- 2015 375 128
- US-A1- 2020 061 481
- US-A1- 2021 192 851

## Description

The present invention relates in one aspect to an augmented reality user device adapted to provide augmented reality content associated with a moveable real-world object. In a further aspect, the invention relates to a toy system adapted for a combined physical and augmented reality play experience associated with a moveable real-world object. In yet further aspects, the invention relates to methods of providing augmented reality content associated with a moveable real-world object. The moveable real-world object is adapted to move with respect to a real-world scene according to a characteristic motion pattern.

### BACKGROUND OF THE INVENTION

Toy systems and, in particular, toy construction systems have been known for decades. In particular, toy construction systems comprising modular toy elements having coupling members for detachably interconnecting the modular toy elements with each other have gained high popularity. The simple building blocks have been supplemented with dedicated toy elements with a mechanical or electrical function to enhance the play value. Such functions include e.g. lamps, switches, sensors, motors, and even robotics controllers. Recently, toy systems that utilize augmented reality (AR) have attracted increased interest. Augmented reality is a technology where a captured live view of one or more items of a physical, real-world environment is augmented by computer-generated content, such as graphics, sound, haptic feed-back, etc., i.e. where a user is presented with a composite representation comprising the live view of the real-world environment and the computer-generated content, e.g. in the form of an overlay of computer-graphics onto the real-world view. An overlay may be additive to the real-world environment or it may mask or replace the view of the real-world environment. For example, computer-generated graphics may be rendered on top of the real-world view or as a replacement where parts of the real-world view are replaced by computer-generated graphics. For the purpose of the present description, a computer-implemented system implementing AR will generally be referred to as an AR system. An AR system generally comprises an image capturing device, and a suitably programmed processing unit for generating the composite representation. Typically, the AR-system further comprises a display and/or further output devices adapted for presenting the composite representation to the user.

In an AR system, image features designated as targets for AR content are often detected and recognized within the captured view of a real-world scene, and the AR system may then generate a computer-generated image (and optionally other computer-generated content, such as sound, haptic feedback, etc.) in dependence upon the designated image feature and superimpose the generated image on the captured view (and optionally otherwise render computer-generated content according to the designated feature).

When combining physical play experiences with virtual content generated on a computer, it is further desirable to provide mechanisms supporting a close integration of physical toys with the virtual reality generated by the computer, so as to achieve a persuasive AR enhanced physical play experience. WO 2020/152189 A1 describes an AR enhanced toy system adapted for an efficient and reliable detection of user manipulation in a physical scene, thereby allowing for a reduction of processing process power for such tasks, and allowing for a smoother AR enhanced physical play experience.

Further challenges arise when augmenting a real world scene with toys adapted to move around in the real world scene, as part of the physical play experience. Such challenges may include the computational effort involved. US 2020/0250852 A1 describes a system and method for iteratively augmenting image frames depicting a scene, by inserting virtual content at an anchor region within the scene, including situations where the anchor region moves relative to the scene. The disclosed system and method allows for attaching virtual content to images of a real world object, which are captured while the object is moving around in the real world. A YouTube video with reference "aJq3GheC5AA" (video URL https://youtu.be/aJq3GheC5AA) shows an example of combining three AR algorithms operating simultaneously in an AR system to provide an augmented reality race track game for a remote controlled toy vehicle. Using image tracking and positional tracking, a virtual race track is fixed in relation to the ground of a captured scene. A remote controlled toy vehicle is physically steered around on the ground while the AR system performs three-dimensional toy vehicle model tracking, and renders AR content associated with the tracked remote controlled toy vehicle.

US 2018/0256989 A1 describes a gaming robot combining physical and virtual gaming action. The gaming robot may be controlled in the physical world to complete augmented reality game missions or battles, e.g. certain virtual gaming elements in a virtual world may interact with physical elements of the real world. In these augmented reality worlds, the gaming robot has consistent physical and virtual character attributes. The gaming robot of US 2018/0256989 A1 is defined as having a large range of functionality with a complex range of controllable movement as compared to toy robots having relatively little freedom of movement and/or relatively little ability to be controlled.

However, challenges remain when a physical toy to be enhanced with an AR experience includes a physical functionality, like a toy vehicle model with a mechanical or electrical motion function. These challenges include creating an engaging and persuasive play experience over an extended period of time, e.g. when the toy moves fast, or far, such that tracking of the toy becomes difficult, and/or when the toy only has basic physical functionality, such that an engaging interactive play experience cannot easily be derived from the physical play experience.

Therefore, there is still a need to improve on the combination of physical play experiences with augmented reality enhancements in an AR system, so as to achieve a persuasive AR enhanced physical play experience.

Therefore according to one aspect, there is still a need for a toy system and a method for providing an improved AR experience in combination with an associated physical play experience involving a moving toy object. In a further aspect, there is still a need to improve combined physical and AR play experiences when using toys having physical functionality, which stimulate physical play by providing basic physical functionality, such as moving toy vehicles, and which at the same time augment the physical play experience with an interactive digital play experience. In a yet further aspect, there is still a need for combined physical and AR play experiences when using a physical toy construction model that may be enhanced with physical functionality in a simple manner, which stimulates physical construction play allowing an unexperienced user to construct models and include basic physical functionality to the physical model in a simple manner, such as including simple motion functionality, and which at the same time stimulate an interactive digital play experience associated with the constructed model. In particular, there is a need to provide an improved interactive digital play experience associated with an associated physical play experience going beyond a simple physical motion functionality of the involved physical toy or toy construction model.

It is further generally desirable to provide a toy system and a corresponding method that allows small children, e.g. pre-school children, to combine physical toys, e.g. one or more physical toy construction models, with a virtual, computer-generated play experience. It is also generally desirable to provide a toy system and a corresponding method that is suitable for children without a detailed understanding of programming techniques, control systems, or the like. It is also generally desirable to enhance the educational and play value of toy systems, and in particular of toy construction systems.

### SUMMARY OF THE INVENTION

A first aspect of the invention relates to an augmented reality (AR) user device adapted to provide augmented reality content associated with a moveable real-world object, wherein the moveable real-world object is adapted to move with respect to a real-world scene according to a characteristic motion pattern, the user device comprising: an image capturing device adapted to capture image data of the real-world scene and the real world object in the real-world scene; a processing unit operatively connected to the image capture device for receiving captured image data. The processing unit is configured to: recognize the moveable real-world object; attribute an augmented reality target to the moveable real-world object; track the augmented reality target in captured image data of the real-world scene, so as to obtain tracking data for the augmented reality target, the tracking data comprising actual position data and actual motion data for the AR target; generate augmented reality content associated with the moveable real-world object according to the position and motion data of the AR-target; wherein generating AR content associated with the moveable real world object comprises defining virtual world objects at virtual world coordinates with respect to the position of the AR-target; and transforming the virtual world coordinates with respect to the AR-target position by an opposite vector of the motion vector, thereby representing a movement of the real world object in respect of the virtual world objects according to the physical motion of the real world object. The toy system further comprises a user input device operatively connected to the processing device and configured to obtain user steering input, wherein generating AR content associated with the moveable real world object further comprises rotating the virtual world coordinates with respect to the AR-target by applying a rotation opposite to the user steering input around a corresponding steering axis passing through the updated AR-target position, thereby representing steering of the movement of the real world object in respect of the virtual world objects according to the user steering input beyond the functional limitations of the real world object. The toy system further comprises a display operatively connected to the processing device and adapted to render the AR-content according to the position and motion data of the AR-target.

Thereby, the combined digital and physical play experience associated with the characteristic physical motion functionality of the real world object is augmented with a virtual steering functionality in an interactive digital play experience that goes beyond the functional limitations of the physical play experience. This augmentation is in the following also referred to as AR steering functionality.

The moveable real-world object is adapted to move with respect to the real-world scene according to its characteristic motion pattern. The characteristic motion pattern is pre-determined. Once initiated, the physical movement of the real world object essentially follows the pre-determined characteristic motion pattern. The virtual steering according to user steering input goes beyond the physical movement of the real world object. The virtual steering according to user steering input steering thus provides steering of the real world object in the virtual world and not a steering of the motion in the real world.

Transforming the virtual world coordinates with respect to the AR-target position by an opposite vector of the motion vector provides the impression of a movement of the real world object in respect of the virtual world objects according to the physical motion of the real world object, within the functional limitations of its characteristic motion pattern. The additional rotation of the virtual world coordinates with respect to the AR-target by applying a rotation opposite to the user steering input around a corresponding steering axis passing through the updated AR-target position provides the impression of steering of the movement of the real world object beyond the functional limitations of its characteristic motion pattern.

It is important to note that the virtual steering functionality goes beyond the functional limitations of the real world object. Consequently, when generating the AR content, the virtual world coordinates are also rotated in response to the user steering input with respect to the real world scene. Therefore, the virtual world coordinates are not substantially fixed with respect to the real world coordinates when representing the virtual steering of the movement of the real world object in respect of the virtual world objects according to the user steering input. The rotation with respect to the real world scene also occurs opposite to the user steering input and around the rotation axis following the updated AR-target position. The position of the rotation axis follows the physical movement of the real world object in the real world scene.

The physical functionality of the real world object may be limited to simple motion functions, which may lead to a frustrating and unsatisfying experience when trying to match the observed motion of the real-world toy and associated AR content, and may thus fail to provide a persuasively augmented physical play experience. Also, the overall play experience may not be very engaging. Such issues may be overcome by embodiments according to the invention, where an active physical play experience of playing with a functional physical toy in action is augmented beyond the actual physical functionality of the physical toy. More particularly, an AR-enhanced digital game experience and the physical play experience are synergistically interrelated with each other, wherein the AR system even adds an interactive steering functionality to the simple motion functionality of the physical play experience.

The real world object associated with the digital play experience provided by the AR user device is adapted to move according to a characteristic motion pattern. Advantageously, the real world object may be a toy vehicle adapted to move according to a characteristic motion pattern along a linear or curved trajectory.

The characteristic motion pattern may include a family of curves, e.g. in a parametrized form. The family of curves may include information on the type and/or shape of motion trajectories, which can be performed by the real world object. The speed and acceleration of the toy vehicle may vary along the trajectory, depending on the propulsion mechanism and dissipation. For example, a toy vehicle travelling along a trajectory may first accelerate due to stored energy being converted into kinetic energy of the toy vehicle by the propulsion mechanism, and subsequently slow down as the stored energy runs out and dissipation takes over. Such information may at least in part form part of the characteristic motion pattern and may be described e.g. as velocity and/or acceleration value profiles along the trajectory, which may also be in e.g. a parametrized, listed, and/or mapped form.

For example, the real world object may be a toy vehicle adapted to move according to a characteristic motion pattern along a trajectory.

A user may operate the AR user device pointing the camera field of view towards the real world object, e.g. a toy vehicle, to capture images thereof. The user may then be prompted to perform steps of recognizing the toy vehicle and attributing an AR-target to the toy vehicle. Steps of recognizing and assigning an AR-target to the toy vehicle may include the processing unit applying an object recognition routine on captured images and/or may include a user selection for identifying/selecting the toy vehicle among a number of toy vehicles according to stored records thereof. Steps of recognizing and assigning an AR-target may also include selecting a digital game experience associated with the toy vehicle, and/or initializing actual AR-target position and motion data, as well as retrieving information on the characteristic motion pattern for the identified toy vehicle.

After that, the AR user device may prompt the user to start the toy vehicle. Starting the toy vehicle may include steps of charging an energy storage, such as a pull-back motor, placing the toy vehicle at a starting location, and/or operating a trigger to activate the motion. Once the toy vehicle moves in the real world scene, the AR user device is configured to track toy vehicle location and motion in captured image frames of the real world scene, so as to obtain tracking data. Based on the tracking data the AR user device may render an animated motion of a virtual world environment with respect to AR-target by moving the virtual world environment with respect to the tracked toy vehicle position, applying a counter-motion opposite to the actual motion vector of the toy vehicle. Thereby, an AR motion animation effect is achieved while tracking the toy vehicle in the real world scene. For a real world object with a linear characteristic motion pattern, a translational counter-motion transformation may be applied according to a current motion vector as determined from tracking data. Counter-motion may here be understood as the motion of the virtual world coordinates with respect to the toy vehicle in the opposite direction with respect to the motion of the vehicle as observed in the image frames captured by the AR user device. The motion animation effect thus relies on and is determined by the actual motion of the real world object in the real world scene.

An AR steering functionality may be added, which relies on and is determined by a user steering input. The AR steering functionality may be added on top of the AR motion functionality. Thereby, an interactive functionality is added as an AR-enhancement of the tracked physical motion of the real world object. The AR steering functionality may be implemented by applying a counter-steering rotation on top of the counter-motion transformation, about a corresponding steering axis passing through the current AR-target location. The AR steering may be applied in response to steering input. Counter-rotation may here be understood as the rotation of the virtual world coordinates with respect to the AR target assigned to the toy vehicle in a direction opposite to the direction of steering the vehicle according to the steering input. Normally, in an interactive play experience, steering input is provided by a user, via any suitable user input devices known in the art. However, more generally it is also conceivable that steering input is partly or entirely computer-generated, e.g. when operating the AR user device in a training mode, in a steering assist mode, in a tutorial mode, in a demo mode, in an auto-pilot mode, or the like. Computer-generated steering input may include steering data where at least one or more degrees of freedom of steering rotation may be determined by the steering data.

Further according to some embodiments of the AR user device, the rotation includes one or more of a pitch rotation, a roll rotation, and a yaw rotation. Thereby, a complex steering AR steering functionality may be constructed for multiple degrees of freedom of steering. Pitch, roll, and yaw may here be defined with respect to the orientation of the real world object, and a corresponding orientation of the associated AR target. AR steering functionality may be implemented in the AR user device as applying pitch, roll, and/or yaw counter-steering rotations on top of the translation counter-motion transformation, in response to corresponding pitch, roll, and/or yaw steering input. Pitch, roll, and/or yaw rotations are performed around respective pitch, roll, and/or yaw axes, each passing through the current AR-target location at the time of applying the steering. The degrees of freedom for steering may be adapted according to steering properties attributed to the real world object. For example, the degrees of freedom for steering of a car travelling on a surface may be limited to allowing for yaw steering only, whereas pitch and roll steering is locked to follow the surface. In another example, a plane flying through the air may be AR steered in all three degrees of freedom.

Further according to some embodiments of the AR user device, the processing unit is further configured to: determine a trajectory of the AR-target according to the characteristic motion pattern, based on the actual position and motion data; determine whether a loss of tracking of the augmented reality target has occurred; update position and motion data of the AR-target with calculated position and motion data according to the trajectory, in case a loss of tracking has occurred; and otherwise update position and motion data of the AR-target with the actual position and motion data according to the tracking data. Thereby an extended AR experience is achieved facilitating a viable AR enhanced interactive digital play experience in combination with a moveable real world toy, as further detailed below.

The real world object to be tracked and enhanced by the AR system moves relative to a global coordinate system of a real-world scene. A particular challenge may arise when the real-world object moves so fast, or so far, that the associated AR system may lose track of the moving object. For example, a moving toy object may become blurred in camera frames captured by the AR system, and/or the moving object may also become smaller within the frame as it moves forward, and/or designated features might become concealed as a consequence of the motion of the moving object. This may pose challenges for reliably tracking and registering the moving toy object over an extended period of time. This would inevitably lead to a particularly frustrating and unsatisfying mismatch between the observed motion of the real-world toy and the associated AR content, prohibitively limit the duration of the play experience, or even prevent proper rendering of AR content, thus failing to provide a persuasively augmented physical play experience. Such issues are overcome by embodiments of the invention by exploiting information on the characteristic motion pattern associated with the moveable real world object. Matching the characteristic motion pattern to reliable tracking data that can be obtained in the beginning of the play experience, a specific trajectory is determined, and unreliable or missing tracking data may then be replaced with calculated data for the position and motion of the AR-target, which follow the specific trajectory. The process of determining position and motion data may be kept transparent to the user of the AR user device, who thus is provided with a combined physical and AR-enhanced digital game experience, which is seamlessly extended beyond the limited period of reliable tracking.

According to a further aspect, these and other advantages of the invention may also be achieved by embodiments of a toy system comprising an AR user device as disclosed herein and a moveable real-world object, wherein the moveable real-world object is adapted to move with respect to a real-world scene according to a characteristic motion pattern. Furthermore, these and other advantages of the invention may also be achieved by embodiments of a toy system, such as those further detailed in the following.

A further aspect of the invention relates to a toy system comprising a moveable real-world object, wherein the moveable real-world object is adapted to move with respect to a real-world scene according to a characteristic motion pattern; an image capture device adapted to capture image data of the real world object in the real-world scene; and a processing unit operatively connected to the image capture device for receiving captured image data. The processing unit is configured to: recognize the moveable real-world object; attribute an augmented reality target to the moveable real-world object; track the augmented reality target in captured image data of the real-world scene, so as to obtain tracking data for the augmented reality target, the tracking data comprising actual position data and actual motion data for the AR target; determine a trajectory of the AR-target according to the characteristic motion pattern, based on the actual position and motion data; determine whether a loss of tracking of the augmented reality target has occurred; update position and motion data of the AR-target with calculated position and motion data according to the trajectory, in case a loss of tracking has occurred, and otherwise update position and motion data of the AR-target with the actual position and motion data according to the tracking data; and generate augmented reality content associated with the moveable real-world object according to the updated position and motion data of the AR-target. The toy system further comprises a display, which is operatively connected to the processing device and adapted to render the AR-content according to the updated position and motion data of the AR-target.

Further according to some embodiments of the toy system, generating AR content associated with the moveable real world object comprises defining virtual world objects at virtual world coordinates with respect to the updated position of the AR-target; and transforming the virtual world coordinates with respect to the updated AR-target position by an opposite vector of the motion vector, thereby representing a movement of the real world object in respect of the virtual world objects according to the motion of the real world object.

Further according to some embodiments of the toy system, the toy system further comprises a user input device operatively connected to the processing device and configured to obtain user steering input; wherein generating AR content associated with the moveable real world object further comprises rotating the virtual world coordinates with respect to the AR-target by applying a rotation opposite to the user steering input around a corresponding steering axis passing through the updated AR-target position, thereby representing steering of the movement of the real world object in respect of the virtual world objects according to the user steering input.

Advantageously according to some embodiments the toy system comprises a user interface operatively connected to the processing unit allowing a user to interact with the processing unit by providing user-input to the processing unit and/or by receiving output from the processing unit. Advantageously according to some embodiments the processing unit is configured to cause presentation of the augmented reality content as user-perceptible output at the user interface. Advantageously according to some embodiments the processing unit is configured to prompt a user for input at the user interface, whereby the user is prompted for information allowing to identify a real-world object to be tracked, to define parameters and/or mathematical functions for determining the characteristic motion pattern, and/or for receiving input related to the AR functionality enhancement of the tracked moveable real world object, e.g. steering input.

Advantageously according to some embodiments image data comprise video data, one or more sequences of captured image frames, a video stream, or the like.

Attributing an AR target to the moveable real world object may include receiving input, such as user input or other input. Input for attributing an AR target to the real world object may include one or more of selecting a representation of the moveable real-world object, matching a contour, confirming a suggested selection, and/or reading an AR tag attached to the real-world object.

Generally, the moveable real-world object is adapted for use as an augmented reality target: i.e. adapted to be registered and tracked by an AR module, recognized, carrying and/or otherwise adapted to act as an augmented reality target using any suitable technique for tracking. Essentially, by attributing an AR target to the real-world object, the processing unit can register and track the real-world object as an augmented reality target. The AR target thus represents the real world target in the AR-system. A position of the AR target in an image of the real world scene may be associated with a location of the real world object in the real world scene. A motion of the AR target as determined from images of the real world scene may be associated with a motion of the real world object in the real world scene. Position and motion data of the AR target at a given point in time may each include orientation of the AR target at that point in time. An orientation of the AR target in an image of the real world scene may be associated with an orientation of the real world object in the real world scene.

Advantageously according to some embodiments information indicative of the characteristic motion pattern of the real-world object may be retrieved from storage media internal storage and/or external storage, such as networked storage, and/or from user input.

The AR system may be configured to determine actual motion data indicative of an actual motion of the real-world object with respect to the real world scene at a first point in time when the AR target is detected in the image data, based on real-world tracking data for an AR-target associated with the real-world object. The AR system may further be configured to develop estimated and/or calculated motion data indicative of an estimated and/or calculated motion of the moveable real-world object with respect to the real world scene at a second point in time when the AR target is NOT detected/tracked in the image data, based on the actual motion data and the information indicative of the characteristic motion pattern. The AR-system may further be configured to determine unreliable and/or unsuccessful tracking and/or that tracking is omitted. The AR-system may e.g. be configured to determine unreliable tracking and/or loss of tracking from a deviation of tracking data from an expected value, such as an expected value following the determined specific trajectory, and/or from a failure to meet predetermined reliability criteria, such as threshold or other criteria for reliable image analysis. The AR system is thus capable of providing estimated and/or calculated position and motion data in response to determining that tracking is unreliable and/or unsuccessful, and/or responsive to that tracking is to be omitted.

Further according to some embodiments of the toy system, the characteristic motion pattern is provided as a mathematical function and/or as parameters, thereby defining a type and/or a general shape of the motion pattern.

Further according to some embodiments of the toy system, the characteristic motion includes one or more of linear motion, oscillatory motion, rotational motion, circular motion, elliptic motion, parabolic motion, projectile motion, and a motion following a pre-determined specified trajectory or path, such as a track-bound or pre-programmed path.

Further according to some embodiments of the toy system, parameters defining the characteristic motion include one or more of: a direction of motion, speed, and acceleration. Speed and acceleration data may include vector data defining a direction along the direction of motion, and may include information on the change of position, orientation, and/or velocity of the AR target. Deceleration may be expressed in a conventional manner as a negative acceleration. Parameters defining the characteristic motion may further include one or more of rotational quantities corresponding to: change of orientation, direction of rotation, orientation of an axis of rotation, rotational speed and/or acceleration.

Further according to some embodiments of the toy system, the toy system further comprises a propulsion mechanism for propelling the real-world object according to the characteristic motion pattern. The propulsion mechanism may be or comprise an internal propulsion mechanism adapted to drive the moveable real-world object, such as an electrical or mechanical motor, such as pull-back, flywheel motor, a repulsion force motor using e.g. compressed air or water, an electrical motor that is solar powered or battery powered, or similar. Thereby a self-contained play experience can be provided requiring only the same real world object, which furthermore may be configured to have a well-defined characteristic motion pattern. Alternatively or in addition thereto, the propulsion mechanism may be or comprise an external propulsion mechanism adapted to launch the moveable real-world object. The mechanism may include a mechanism to simply push in a certain direction with a given force, or eject from a launching station, such as a rubber band powered launcher, that can be set to one or more pre-defined tension settings, or the like. Thereby, a play experience with a well-defined motion pattern may be obtained. An external propulsion mechanism may even be combined with an internal propulsion mechanism in order to create more complex, yet well-defined characteristic motion patterns.

Further according to some embodiments of the toy system, the propulsion mechanism comprises a trigger device. The trigger device is arrange to activate the propulsion mechanism and thus the motion function of the moveable real world object. Operating the trigger causes an actual motion of the moveable real-world object with respect to the real-world scene at a well-defined starting point. Starting the motion of the real world toy may thus more easily be synchronized with the start of the AR-enhanced digital game experience on the AR user-device. This is particularly useful when the AR user-device is a handheld unit, such as a mobile phone, tablet, or the like.

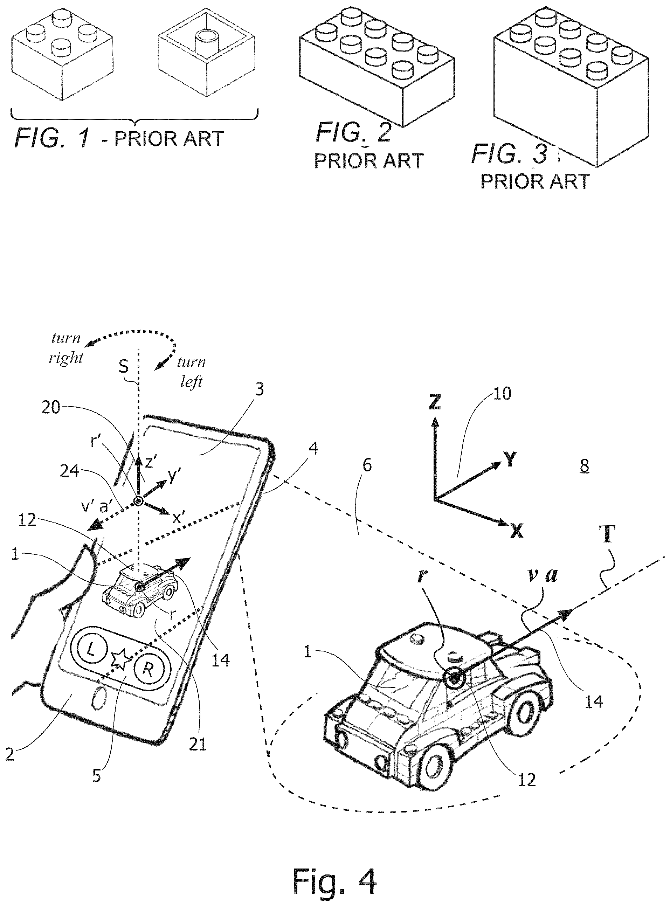

Further according to some embodiments of the toy system, the real-world object is a toy construction model constructed from modular construction elements. The toy construction elements may comprise passive and/or function elements known in the art, such as those described below with reference to Figs.1-3. Thereby, the toy system is adapted to stimulate construction play using simple functional elements at a complexity level that is also accessible to less experienced/skilled users, and/or may be realized with less sophisticated functional construction elements being required. The interactive digital play experience associated with the constructed model may then augment the physical functionality of the constructed model, with functionality that goes beyond the limitations of the relatively simple physical functionality of the constructed model. In particular, a steering functionality may be added to the interactive play experience, which augments the physical play experience beyond the characteristic motion pattern along a trajectory, as determined by the simple motion functionality of the constructed model. For example, the real world object may be a toy vehicle model adapted to only travel in a straight line, when moving on a flat surface.

According to further aspects, these and other advantages of the invention may also be achieved by methods of providing augmented reality content associated with a moveable real-world object, wherein the moveable real-world object is adapted to move with respect to a real-world scene according to a characteristic motion pattern, such as those further detailed in the following.

A further aspect of the invention relates to a method of providing augmented reality content associated with a moveable real-world object, wherein the moveable real-world object is adapted to move with respect to a real-world scene according to a characteristic motion pattern, the method comprising the steps of: recognizing a moveable real world object; attributing an augmented reality target to the moveable real-world object; providing captured image data of the moveable real-world object moving in the real-world scene; tracking the augmented reality target in the captured image data of the real-world scene, so as to obtain tracking data, the tracking data comprising actual position data and actual motion data indicative of an actual motion of the moveable real-world object with respect to the real-world scene; determining a trajectory of the AR-target according to the characteristic motion pattern, based on the actual position and motion data; determining whether a loss of tracking of the augmented reality target has occurred; updating position and motion data of the AR-target with calculated position and motion data according to the trajectory, in case a loss of tracking has occurred, and otherwise updating position and motion data of the AR-target with the actual position and motion data according to the tracking data; generating augmented reality content associated with the moveable real-world object according to the updated position and motion data of the AR-target; and rendering the AR-content according to the updated position and motion data of the AR-target.

A further aspect of the invention relates to a method of providing augmented reality content associated with a moveable real-world object, wherein the moveable real-world object is adapted to move with respect to a real-world scene according to a characteristic motion pattern, the method comprising the steps of: recognizing the real world object; attributing the real world object with an AR-target; obtaining a position of the AR-target and a motion vector for the AR-target associated with the position; defining virtual world objects at virtual world coordinates with respect to the position of the AR-target; transforming the virtual world coordinates with respect to the AR-target position by an opposite vector of the motion vector; receiving a steering input; rotating the virtual world coordinates with respect to the AR-target by rotation opposite to the steering input around a corresponding steering axis passing through the AR-target position; and rendering virtual world objects at the transformed and rotated virtual world coordinates.

Advantageously according to some embodiments the rotation is one or more of a pitch rotation, a roll rotation, and yaw rotation with respect to a forward motion indicated by the motion vector and an orientation of the AR-target representing an orientation of the real world object.

### BRIEF DESCRIPTION OF THE DRAWINGS

Embodiments of the invention will now be described in more detail in connection with the appended drawings.
Figs. 1-3 each show a prior art toy construction element.
Fig. 4 shows an embodiment of a toy system as disclosed herein.
Figs. 5 and 6 each show diagrammatically a sequence of actual and calculated positions and motion vectors of an AR-target along a respective characteristic trajectory;
Fig. 7 shows a flow diagram of an example of a computer-implemented process as disclosed herein; and
Fig. 8 shows a flow diagram of a further example of a computer-implemented process as disclosed herein.
Figs. 9a-9c show a sequence of screen shots for an example of an AR-enabled digital game experience with AR-content rendered according to one embodiment of the invention.

### DETAILED DESCRIPTION

Various aspects and embodiments of toy construction systems disclosed herein will now be described with reference to toy construction elements in the form of bricks. However, the invention may be applied to other forms of toy construction elements and other forms of toys.

Fig.1 shows a toy construction element with coupling pegs on its top surface and a cavity extending into the brick from the bottom. The cavity has a central tube, and coupling pegs on another brick can be received in the cavity in a frictional engagement as disclosed in US 3 005 282. Figs. 2 and 3 show other such prior art construction elements. The construction elements shown in the remaining figures have this known type of coupling members in the form of cooperating pegs and cavities. However, other types of coupling members may also be used in addition to or in-stead of the pegs and cavities. The coupling pegs are arranged in a square planar grid, i.e. defining orthogonal directions along which sequences of coupling pegs are arranged. The distance between neighbouring coupling pegs is uniform and equal in both directions. This or similar arrangements of coupling members at coupling locations defining a regular planar grid allow the toy construction elements to be interconnected in a discrete number of positions and orientations relative to each other, in particular at right angles with respect to each other. The toy construction elements shown here, in Figs.1-3, are of the passive type, without additional functionality beyond mechanical model building, such as electromagnetic, electronic, optical, or the like. However, some embodiments of toy construction sets may also include active toy construction elements that are configured to perform user perceptual functions, e.g. emit light, sound, impart motion, etc.

Fig. 4 shows an embodiment of a toy system as disclosed herein. The toy system comprises a tablet computer 2 having stored thereon an AR App executing an AR-based digital game application. The tablet computer 2 comprises a display 3 and a digital camera 4. The tablet computer further comprises a processing unit executing the AR App and a storage medium for storing game-related data. It will be appreciated that, instead of a tablet computer, the toy system may include another type of suitably programmed data processing device or system, including a display, a processing unit, and an image capture device. Examples of suitable data processing systems include a personal computer, a desktop computer, a laptop computer, a handheld computer, a game console, a handheld entertainment device, a smart phone, or any other suitably programmable computer.

The toy system further comprises a moveable real world object adapted to be used as a reference toy 1. In this example the reference toy 1 is a toy construction model of a vehicle constructed from a plurality of toy construction elements, e.g. toy construction elements of the type described in connection with Figs. 1-3.

The display 3 is operatively coupled to (e.g. integrated into) the tablet computer 2, and operable to display, under the control of the processing unit of the tablet computer 2, a video image. In the example of Fig. 4, the display is a touch-sensitive display allowing the tablet computer to receive user inputs such that the user may interact with the AR-based digital game executed on the tablet computer 2. In the example shown in Fig.4 a dedicated user input area may be provided on the touch-sensitive interface, which may comprise specifically programmed regions for receiving steering input, here indicated by buttons for turning left (L) and right (R). It will be appreciated that the data processing system may comprise alternative or additional user interface devices for allowing the user to interact with the digital game, e.g. by gestures, eye tracking, etc.

The digital camera 4 is a video camera operable to capture video images of a real-world scene 8. In the example of Fig. 4, the video camera is integrated into the handheld tablet computer 2, i.e. the user may move the tablet computer around so that the current field of view 6 of the digital camera covers different parts of the real-world scene from different viewpoints. The real-world scene 8 may e.g. include a surface such as a desktop, a floor, or the like on which the moveable reference toy 1 may travel along a trajectory T. The digital camera is operatively coupled to (e.g. integrated into) the tablet computer 2 and operable to forward the captured video image to the processing unit of the tablet computer 2.

The digital camera 4 captures video images of the real-world scene 8 and the tablet computer 2 displays the captured video images on the display 3. In the example of Fig. 4, the real-world scene 8 comprises the reference toy 1 which is shown within the field of view 6 of the camera 4. In addition to the reference toy 1, the real-world scene 8 may comprise further objects such as other household objects, toys, or the like (not shown).

The captured video images are displayed by the tablet computer 2 on its display 3. Therefore, a user may cause the moveable real world object, reference toy 1, to move around and/or otherwise manipulate the reference toy 1 within the field of view 6 of the digital camera 4 and view live video images from the digital camera 4 of the reference toy 1 and at least of parts of the real-world scene 8. Alternatively or additionally, the user may change the position and/or orientation of the digital camera so as to capture images of the reference toy 1 from different positions. Additionally, the computer may be operable to store the captured video images on a storage device, such as an internal or external memory, of the computer, and/or forward the captured video to another computer, e.g. via a computer network. For example, the computer may be operable to upload the captured video images to a website.

The tablet computer 2 is suitably programmed to execute an AR-enabled digital game, during which the computer performs image processing on the captured video images so as to detect the reference toy 1 within the captured video image. Responsive to the detected reference toy, the computer may be programmed to generate a modified video image, e.g. a video image formed as the captured video image having overlaid to it a computer-generated image, e.g. a video image wherein at least a part of the captured video image is replaced by a computer-generated image. The computer 2 is operable to display the modified video image on the display 3. For the purpose of the present description, a computer operable to implement AR functionality operatively connected to a video camera and a display will also be referred to as an AR system.

Image processing methods for detecting AR markers and for generating modified video images responsive to detected objects are known as such in the art (see e.g. Daniel Wagner and Dieter Schmalstieg, "ARToolKitPlus for Pose Tracking on Mobile Devices", Computer Vision Winter Workshop 2007, Michael Grabner, Helmut Grabner (eds.), St. Lambrecht, Austria, February 6-8, Graz Technical University).

In the example of Fig. 4, the physical reference toy 1 is a toy construction model of a car constructed from conventional toy construction elements, such as toy construction elements of the type described in connection with Figs. 1-3. It will be appreciated, however, that other embodiments may employ other types of reference toys.

Once the computer has recognized the reference toy 1, and assigned an AR-target to it, the user may manipulate the physical reference toy 1 to move within the field of view of the digital camera 4 according to a motion pattern that is characteristic for the physical reference toy 1, e.g. by orienting the physical reference toy 1 and initiating a motion of the physical reference toy 1 along a trajectory T, wherein the trajectory is determined by the characteristic motion pattern associated with the reference toy 1.

The computer 2 applies image analysis to track the position and motion vector 14 of the AR-target representing reference toy 1 with respect to the real world scene 8 (here illustrated as Cartesian coordinates (X, Y, Z)). The computer 2 displays the live video feed of the video camera 4 on the display 1 and adds, responsive to the detected position and motion vector 14, augmented reality special effects to the live video feed. In particular, the computer 2 defines virtual world objects 21 at virtual world coordinates 20 (here illustrated as Cartesian coordinates (x', y', z')). When the reference toy 1 moves in the real world scene according to the motion vector 14, the virtual world coordinates 20 are transformed by the opposite vector 24 with respect to the position r of the reference toy 1 in the captured images of the real world scene 8, thus moving the virtual world objects 21 correspondingly with respect to the reference toy 1. For example, a reference point r' of the virtual world coordinates 20 may initially be placed at an initial position r of the AR-target position for reference toy 1 as determined in an initial captured image. As the reference toy 1, and thus the AR target 12 assigned to it, changes its position r (and possibly its orientation) in the coordinates 10 of the real world scene, following the trajectory T according to the velocity v and/or acceleration a associated with the motion vector 14, the virtual world coordinates 20 are then shifted accordingly (and possibly rotated for correct orientation) in the opposite direction, by the opposite motion vector 24, with respect to the AR-target 12 of reference toy 1. By applying such an augmentation to captured views of the real world scene, a composite AR representation is produced on the display 3, where a moveable real world object, i.e. reference toy 1, is seen to move with respect to virtual world objects 21 in a virtual world, at a speed and/or acceleration corresponding to its speed and acceleration in the real world. By way of example, as shown in Fig.4, the virtual world objects 21 may include a rendering of a road or race track, as outlined by the thick dotted lines on the display 3 of the computer 2, along which car 1 is seen to travel in the composite AR video images on display 3.

By referring the transformation of the virtual world coordinates directly to the moveable real world object according to the position and motion vector of the real world object in the captured images, there is no need for providing any additional AR routines and AR-targets to be recognized and tracked for defining a virtual world in which the moveable toy can travel. Furthermore thereby, an additional steering experience is facilitated as further detailed in the following.

As further as shown in Fig.4, a user interface of the computer 2 may comprise input elements 5 adapted to receive a steering input for steering the motion of the vehicle 1 in respect of the virtual world. In the example shown, the input elements 5 include a dedicated button labelled "L" for steering the vehicle towards the left and a dedicated button labelled "R" for steering the vehicle towards the right. When a user activates the steering input button labelled L, the computer 2 thus receives a steering input to steer towards the left as the vehicle travels along the virtual world road 21. In response to receiving the steering input to turn left, the computer then rotates the virtual world coordinates with respect to the vehicle 1 by a rotation opposite to the steering input around a corresponding steering axis S passing through the AR-target position r. In other words, a steering input for steering the reference toy 1 in a counter-clockwise direction is represented by a corresponding rotation of the virtual world coordinates in a clockwise direction around the axis S at the position of the AR-target assigned to the reference toy. For steering left and right the axis S is perpendicular to a plane in which the reference toy 1 is seen to travel in the virtual world. In the example shown in Fig.4, the virtual road is arranged in a plane parallel to the (x', y') plane of the virtual world coordinate system. Steering towards the left or towards the right thus leads to a corresponding opposite rotation of the virtual coordinates around a steering axis S parallel to the z'-axis as indicated by arrows labelled "turn left" and "turn right" in Fig.4, respectively.

Combining the transformation of the virtual world coordinates resulting from the motion of the reference toy in the real world and the rotation of the virtual world coordinates in response to the steering input may be combined. The virtual world objects may then be rendered at the transformed and rotated virtual world coordinates. Thereby, an AR augmentation is applied to captured views of the real world scene, producing a composite AR representation on the display 3, where the user steers a moveable real world object, i.e. reference toy 1, as it moves in the virtual world at a speed and acceleration corresponding to its speed and acceleration in the real world. In the example of Fig.4, the user may thus steer the car 1 as it travels along a rendering of a road or race track 21 in a composite AR representation.

In the example of Fig.4, a "yaw" type steering is performed by applying a yaw counter-rotation to the virtual world coordinates around a yaw axis S, in response to activating the steering buttons labelled "L" and "R" in the steering input region 5 as described above. More generally, the steering input may be one or more of a pitch, roll, or yaw steering input in order to control one or more of the pitch, roll, and yaw of the AR-target representing the reference toy, with respect to the virtual world coordinates. Analogue to what has been described above with reference to Fig.4, the steering control may then be visualized as a corresponding counter-rotation of the virtual world coordinates with respect to an orientation of the AR-target representing an orientation of the real world object, around respective pitch-, roll, and/or yaw rotation axes passing through the position of the AR-target. Pitch, roll and yaw as used herein are to be understood in agreement with common definitions for pitch, roll and yaw of a vehicle having a forward direction of travel in a horizontal plane associated with the vehicle: yaw refers to steering/rotation around a yaw axis perpendicular to the horizontal plane; pitch refers to steering/rotation around a pitch axis parallel to the horizontal plane and perpendicular to the forward direction; and roll refers to steering/rotation around a roll axis parallel to the horizontal plane and parallel to the forward direction.

In this way, a physical toy that is adapted to move in a simple manner in the real world, i.e. according to a simple characteristic motion pattern, may thus be enhanced by an associated AR experience, where the user steers the toy as it travels through the AR world.

A physical play experience may thus be augmented in an associated digital game experience to provide a steering functionality, which goes beyond the physical motion functionality of the real world toy. Thereby an enjoyable play experience with a simple physical toy is expanded and integrated with a digital game experience in an intuitive manner, which is easily accessible also to unexperienced users. This is particularly useful e.g. when constructing a toy vehicle model and adding simple motion functionality to the model, e.g. a motor propelling the model to follow a linear trajectory, or a mechanism for launching the model to fly along a curved trajectory, such as a projectile motion. Reducing the complexity of the physical functionality of the toy required for the combined play experience allows for more flexibility in creating new and fantasy inspired play experiences, where e.g. a physical toy model of a car, which is adapted to physically move in a straight line, may be controlled to be steered on a virtual race track, or may even be controlled to lift off a virtual ground to fly in an AR-enhanced scene.

Reducing the complexity of the physical functionality of a toy construction model to be constructed for the combined physical and AR play experience may also make the play experience accessible to a broader user group and/or increase the accessibility to less experienced users, because the corresponding parts required and the complexity of the construction is less demanding, yet providing an engaging play experience that is augmented beyond the physical functionality of the real world toy with virtual functionality in the associated AR-enhanced digital game experience.

However, when tracking a reference toy that moves in a real world scene, the tracking may become unreliable, or may even be lost, e.g. due to the AR-target quickly decreasing in size in the images captured by the AR system as the reference toy moves further and further away from the image capturing device. The period of reliable tracking may thus become prohibitively short for providing a viable interactive play experience that expands physical play with virtual functionalities as described above. According to embodiments of the present invention, this issue is addressed by exploiting knowledge of the characteristic motion pattern of the tracked reference toy, which is determined by the physical motion functionality of the moveable real world object used as reference toy.

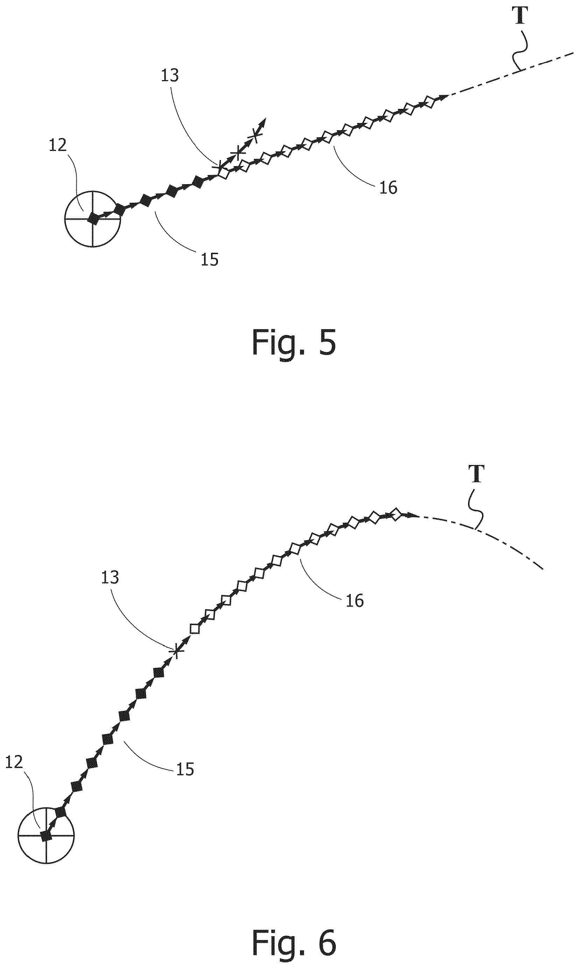

Figs.5 and 6 schematically show tracking of the physical motion of a moveable real world object in a real world scene and the extension of the tracked motion by a calculated motion along a trajectory T according to a simple characteristic motion pattern. The trajectories are indicated by the dash-dotted lines in Figs.5 and 6, wherein Fig.5 shows a trajectory T of a linear motion pattern and Fig. 6 shows a trajectory of a curved motion pattern, such as for a projectile motion. Initially, a reference toy 1 may be identified, e.g. by recognizing the reference toy in captured images thereof, or by recognizing and/or selecting the toy in a user input procedure. Once recognized, an AR-target 12 may be assigned to the reference toy 1, which in Figs.5 and 6 is represented as a crosshair in a circle placed at an initial position of the AR-target. Generally, the AR-target may include data indicative of a position of the reference toy in the real world scene as derived from captured images of the real world scene. Generally, the AR-target may further include data indicative of an orientation of the reference toy in the real world scene as derived from captured images of the real world scene. Applying image analysis to subsequent images of a captured image sequence the computer 2 of the AR-system may track the position, and optionally the orientation, of the AR-target over time. Once the reference toy has been identified in the beginning, the image analysis routine used for tracking may avoid applying a computationally expensive full recognition procedure to each of the images by reducing the tracking to following simple image features in a sequence of images. For example, such tracking features may be pre-determined and/or determined dynamically during the initial recognition procedure. Analysing the time dependence of the tracked position information, a tracked motion vector may be determined for each, or at least for selected ones of the tracked positions, thereby defining an ensemble of actual position and motion data 15. By way of example, the tracked motion vector may include data representing a velocity, a change in velocity, a direction, and/or a change in orientation of the AR-target. Typically, the tracked motion vector at least includes a velocity and a direction of motion. In Figs.5 and 6, the tracked position of the AR-target in subsequent images of a video stream is marked each time by a filled diamond, and the direction and velocity of the AR-target at each position is marked with a corresponding arrow. At a certain point, tracking of the AR-target associated with the reference toy may become unreliable and lead to tracking errors, and a loss of tracking may be determined, as indicated by crosses 13. Using the tracking data 15 on actual motion obtained thus far and further using beforehand knowledge on a characteristic motion pattern descriptive of the type of motion that the reference toy 1 can perform according to the physical motion functionality associated with it, a specific trajectory may be then calculated for the case at hand. Positions and corresponding motion vectors along the specific trajectory T may then be calculated accordingly, thereby defining an ensemble of calculated position and motion data 16. Erroneous and unreliable tracking data 13 may be discarded in favour of calculated position and motion data 16. In Figs.5 and 6, the calculated position of the AR-target in subsequent images of a video stream is marked each time by an empty diamond, and the correspondingly calculated direction and velocity of the AR-target at each position is marked with a corresponding arrow. Using the calculated data 16 in direct extension of the tracked data 15, AR-content can be provided seamlessly in relation to the position and motion of the AR-target along a given trajectory T in a convincing manner and over an extended period. Thereby, a prohibitively short tracking period may be overcome, and a viable interactive play experience is facilitated.

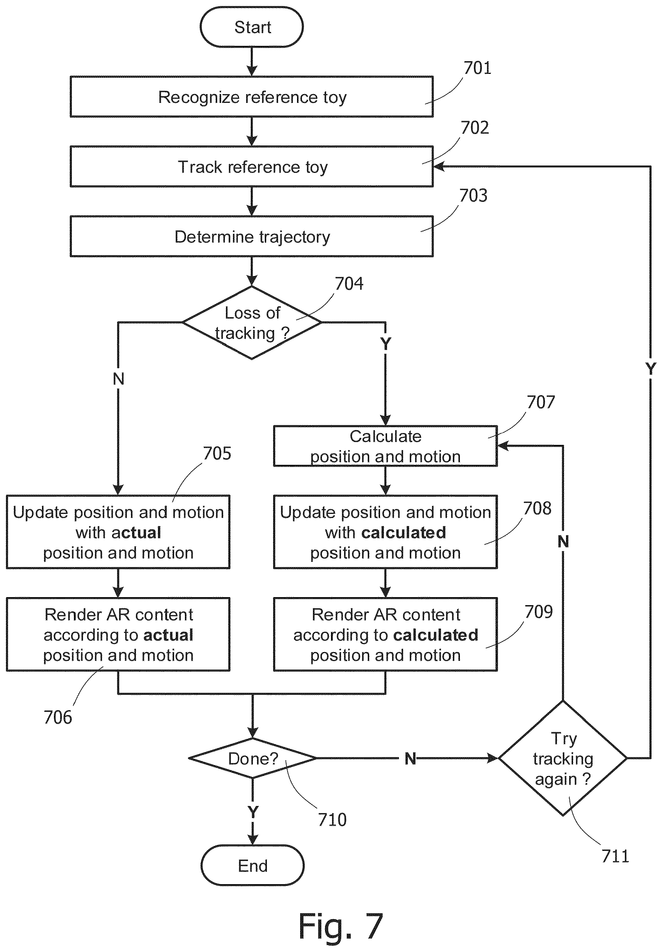

Fig.7 shows a flow diagram of an example of a computer-implemented process as disclosed herein. The process may e.g. be performed by the tablet computer 2 of Fig. 4, when suitably programmed, or by another suitable AR-enabled data processing system. The process of Fig.7 is directed to facilitating an extended interactive AR play experience associated with a physical reference toy moving in a real world scene.

In an initial step 701, the process recognizes a reference toy in one or more captured video images received from a digital camera, e.g. from the built-in camera 4 of the tablet computer 2. To this end, the process may initially allow the user to select one of a plurality of available reference toys, e.g. in an on-screen selection menu. In some embodiments, the process may optionally display building instructions for constructing the reference toy from toy construction elements of a toy construction set.

The user may then place the reference toy in a real world scene on a surface and direct the digital camera to capture video images of the reference toy. During the initial recognition step, the computer may display a frame, object outline or other visual guides in addition to the live video feed in order to aid the user in properly directing the digital camera. The process recognizes the reference toy using a suitable mechanism for object recognition known as such in the field of computer vision, e.g. based on a set of recognisable key features, such as corners, edges, colours etc. To this end, the process may retrieve known reference features of the reference toy from a storage device (not shown), e.g. from an internal memory of the computer, from a cloud based storage or the like. The reference toy has a physical motion functionality, which when activated causes the reference toy to move in the real world along a trajectory T according to a characteristic motion pattern. The characteristic motion pattern is associated with the recognized reference toy and may be described, e.g. in terms of a parametrized function defining an ensemble of generic trajectories. A specific trajectory may be determined by setting parameters of the function. For example, a characteristic motion pattern may be linear motion, wherein parameters define a starting point, a velocity, an acceleration, and a direction of motion. A specific linear trajectory may thus be determined from the ensemble of the linear motion pattern, by setting these parameters. The process may retrieve a description of the characteristic motion pattern associated with the recognized reference toy from a storage device (not shown), e.g. from an internal memory of the computer, from a cloud based storage or the like.

Once the reference toy has been recognized, the user may activate the motion functionality of the reference toy, e.g. by means of a trigger arranged on the reference toy itself, and continue to capture images of the reference toy as it moves through the real world scene.

In step 702, the process then tracks the reference toy in the captured images to obtain tracking data representative of an actual motion of the reference toy in the real world scene.

In step 703, the process can then match the retrieved information on the characteristic motion pattern with the obtained tracking data representative of the actual motion of the reference toy in the real world scene. The required parameters can then be calculated, and the specific trajectory of the reference toy may be determined.

In step 704, the process may determine if tracking has become unreliable, or that a loss of tracking has occurred. Unreliable tracking may e.g. be determined as a loss of tracking, if the detection of one or more designated features required for tracking is unsuccessful. Furthermore, unreliable tracking may also be seen as a loss of, if a given designated feature has decreased in size in captured images of the real world scene to such an extent (e.g. to below a pre-determined threshold) that the designated feature is unlikely to be properly resolved. A simple failure to detect the reference toy in the captured images may also be taken as a loss of tracking. Alternatively or in addition thereto, once the specific trajectory of the reference toy has been determined, the process may also determine a loss of tracking when a comparison of a current value for a tracked position of the reference toy shows a deviation from the specific trajectory beyond a pre-determined threshold.

In case the process for a given image frame determines in step 704 that tracking is reliable, and therefore not lost (branch labelled "N" at step 704 in Fig.7), the process proceeds in step 705 with updating the current position and motion data for the moving reference toy in the given image frame with the most recent actual position and motion data as obtained by image analysis. In step 706, the process then renders AR content to the given image frame, based on the actual position and motion data.

However, in the case that the process for the given image frame in step 704 determines that tracking is lost (branch labelled "Y" at step 704 in Fig.7), the process may proceed in step 707 with calculating current position and motion data for the given image frame and then continue in step 708 with updating the current position and motion data for the moving reference toy in the given image frame with the calculated position and motion data. In step 709, the process then renders AR content to the given image frame, based on the calculated position and motion data.

In step 710, the process determines whether the tasks are done. If the process is not done with all tasks, and depending on whether or not the process is set to retry tracking (step 711) the process may resume at step 702 (branch labelled "Y" at step 711 in Fig.7) or at step 707 (branch labelled "N" at step 711 in Fig.7). Otherwise the process ends (branch labelled "Y" at step 710 in Fig.7). It may be noted that modifications to the flow for carrying out and repeating the above-mentioned steps may be conceived, and are not to be considered as excluded by the above description. For example, the initial step for tracking the reference toy may be required to be repeated for a pre-determined number of times, e.g. on a pre-determined number of consecutive image frames in a captured video sequence, or until a routine attempting to determine the specific trajectory yields a result fulfilling pre-determined stability criteria. Furthermore, once a stable specific trajectory has been determined, step 703 of determining a specific trajectory may be omitted for the remainder of the process.

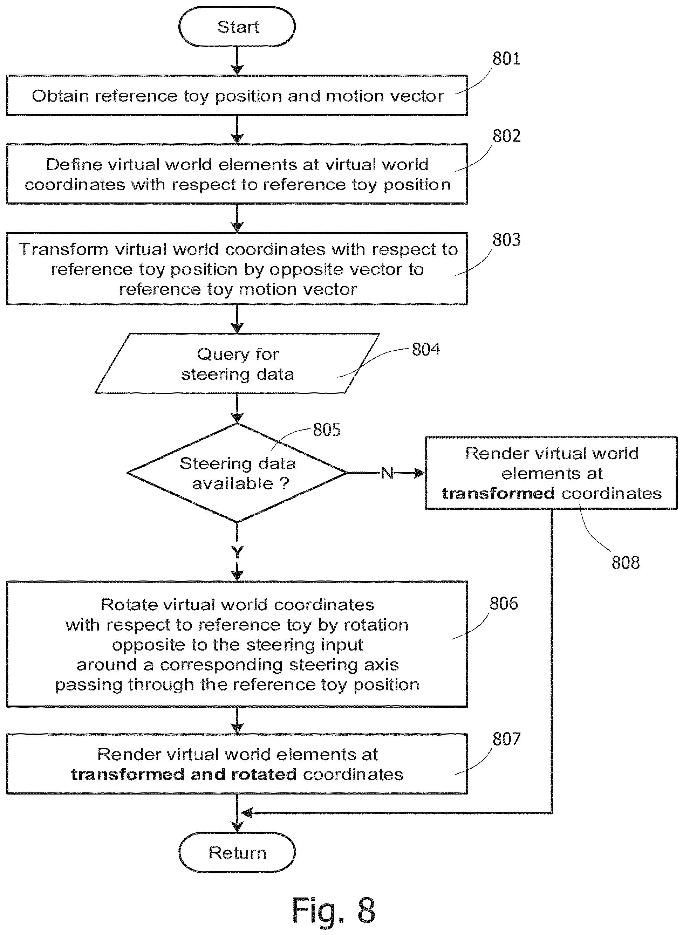

Fig.8 shows a flow diagram of an example of a computer-implemented process as disclosed herein. The process may e.g. be performed by the tablet computer 2 of Fig. 4, when suitably programmed, or by another suitable AR-enabled data processing system. The process of Fig.8 is directed to extending an AR-experience involving a physical reference toy moving in a real world scene with a virtual steering functionality going beyond the physical motion functionality of the reference toy. In order to facilitate a viable play experience, the interactive AR play experience of the process of Fig.8 is most advantageously integrally combined with a process allowing for an extended play period, such as the process described above with respect to Fig.7.

In step 801, the process obtains a current position of the reference toy for a given image frame and an associated motion vector based on the corresponding motion data for the given image frame. The position and motion data may be actual position and motion data or calculated position and motion data as described above with respect to Fig.7.

In step 802, the process defines virtual world objects at virtual world coordinates with respect to the position of the reference toy in the given image frame as obtained in step 801.

In step 803, the process transforms the virtual world coordinates with respect to the reference toy position by the opposite vector to the motion vector obtained in step 801.

In step 804, the process queries for steering data. Typically, the process queries a user interface device of the AR system for user input and returns any steering data thus provided. A user may e.g. input steering data at dedicated user interface devices, such as the dedicated steering buttons labelled "L" and "R" on the user interface of the tablet 2 shown in Fig.4. Alternatively or in addition thereto, the process may obtain computer-generated steering data, e.g. for the purpose of a demonstration mode, a tutorial mode, an auto-pilot mode, a steering assistant mode, or the like.

In step 805, the process determines if steering data is available. In case steering data is available (branch labelled "Y" at step 805 in Fig.8), the process proceeds to step 806. In case no steering data is available (branch labelled "N" at step 805 in Fig.8), the process proceeds to step 808.

In step 806, the process rotates the virtual world coordinates with respect to the reference toy by applying a rotation opposite to the steering input around a corresponding steering axis passing through the reference toy position. In step 807, the process then renders the virtual world objects at the transformed and rotated coordinates. The process is thereby configured to provide composite imagery on a display of the AR-system, where the process adds degrees of freedom for virtually steering the reference toy in a virtual world to the degrees of freedom for motion in the real world as determined by its physical motion functionality. In step 808, the process merely renders the virtual world objects at the transformed virtual world coordinates, thereby reflecting the real world motion directly in the virtual world. Once rendering is completed according to either step 807 or step 808, the process may return.

### EXAMPLES

### Example 1 - linear motion (car)

Referring back to Fig.5, an example of tracking a reference toy adapted for a linear motion pattern is shown, e.g. for a toy car equipped with a pull-back motor, a pushed toy car, or a similar linear propulsion mechanism to drive the toy car forward in a straight line. The example AR process may be grouped in five stages as follows.

In a first stage, object recognition running on a computing device tracks the moving toy following a specific trajectory. Using computer vision analysis of each camera frame, the process locates the toy object in each image. This is represented by the solid markers 15 in Fig.5.

In a second stage, when the toy object is too far away to represent enough pixels in the captured image frames to be analysed and found, the tracking algorithms used may fail or yield erroneous results, such as indicating that the object has lifted off into the air because of perspective. This behaviour is indicated by crosses 13 in Fig.5.

In a third stage, the process performs an assessment of the correctness of the tracking result, based on prior knowledge about the characteristic motion pattern of the tracked toy object. In the present example, it is known beforehand that the toy object has a linear motion pattern governed by the orientation of the toy vehicle and the mechanism driving the motion. Therefore, the toy object will not change direction as it is only adapted to move in a straight line. The process can thus be programmed to correct the erroneous tracking result, by replacing the motion data obtained from the tracking algorithm by calculated motion data that follow a straight line. The calculated motion data is represented by the hollow markers 16 in Fig.5.

In a fourth stage, the specific linear trajectory of the tracked toy may be determined based on the initial, reliable motion tracking data. As the velocity, the heading of the toy object and the type of path it will take are known, as well as the position when tracking is lost, the process can perform vector calculations to give a convincing impression of where the toy may end up. This is further represented by the hollow markers 16 in Fig.5. For example, the speed of the toy object may be calculated based on the first and last position recorded. The first and last positions recorded may be used as inputs in a function that returns the distance between two vectors. This distance can then be divided with the time between the first and last positions (e.g. 1 second) to estimate the speed. If the application loses track of the toy object, the script may be programmed to stop collecting tracking data points. Instead, a virtual reference may be placed in the last recorded position of the toy object. The position of the virtual reference may be updated several times per second. This estimation is typically made based on the most recent speed calculation of the object, the frame rate of the AR-system for capturing image data, and a decay rate. These calculated values are also stored and eventually replace those that were registered based on the object.

In a fifth stage, a steering experience may be added. Since the process is now able to determine and extend the trajectory of the toy object moving along a straight line, the process may add further movement to the world, through relative motion with respect to the tracked toy object. In response to steering input from the user, the virtual world is counter-rotated in the AR-enhanced view displayed on the AR-system, i.e. the virtual world objects shown on top of the real world view are rotated in a direction opposite to the steering input from the user. Thereby, a steering experience from the point of view of the toy object is generated. The process can thus simulate steering of the toy object around bends of a virtual racetrack by rotating the virtual world around a corresponding yaw axis of the toy object, instead of physically steering the toy object itself.

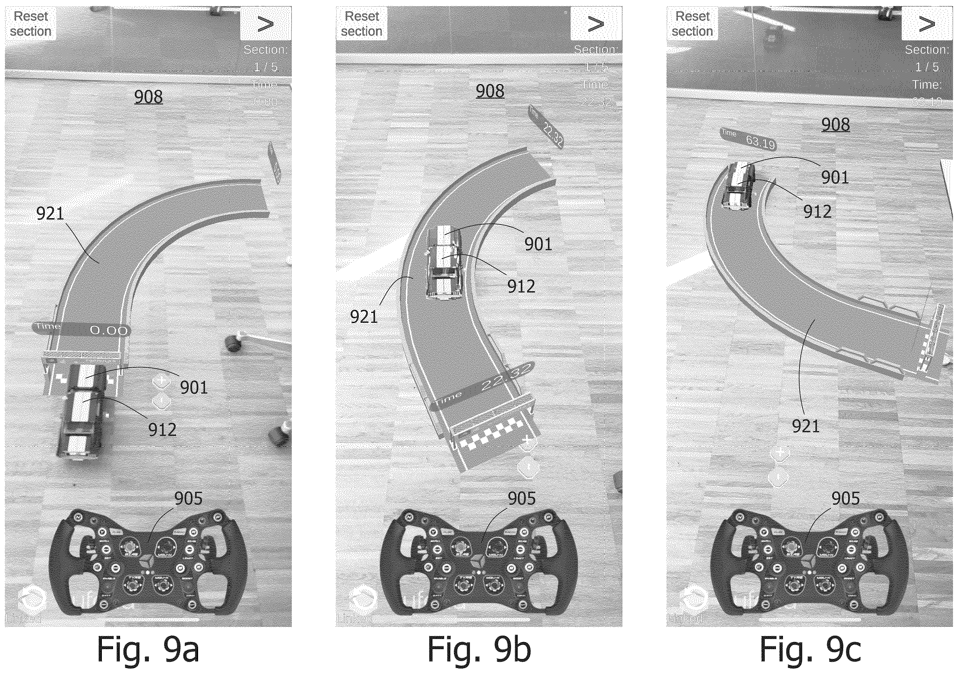

The resulting combined physical and AR-enhanced digital game experience is illustrated in Figs.9a-c, where a car 901 is seen to travel on a surface in a real world scene 908 along a straight line. A virtual race track 921 and further virtual world objects, such as a START-gate and timer displays, are presented in combination with a live view of the real world scene 908. A steering input device 905 allows a user to provide steering input to the process. An AR steering experience of the car 901 is achieved by moving the virtual world objects including the racetrack 921 when the user steers.

Fig.9a-c show composite AR presentations at different points in time of the play experience. As already described above, capturing and following the actual linear motion of a physical toy car 901 along a surface in a real world scene 908, the real world linear motion is transformed by an AR-system into a forward motion of the toy car 901 in a virtual world, with an added virtual experience by rotating the virtual world about the toy car 901 for steering the augmented toy car as it travels along a virtual race track 921 in the virtual world.

In Fig.9a, a race game has been selected by a user, and the virtual race track 921 and a steering control panel 905 are displayed on the screen of an AR-system. Furthermore in Fig.9a, the toy car 901 has been recognized in the real world scene 908, and an AR-target 912 has been assigned to the toy car 901. The toy car 901 is ready to go right at the start of the virtual race track 921.

In Fig.9b, the user has activated the physical motion of the toy car 901, which therefore moves in a forward direction along a straight line in the real world scene 908. A tracking process captures and tracks the position and motion of the associated AR-target 912 in the captured images to generate tracking data. A user input process monitors the steering input panel 905 and receives steering input data. Combining the tracking data and the steering input data, the AR-process renders the race track 921 at virtual world coordinates that have been moved according to the tracking data and rotated according to the steering input data, such that the toy car 901 is presented to be steered along the race track 921.

In Fig.9c, tracking has been lost. A calculation process therefore calculates the position and motion of the associated AR-target 912 in the captured images on the basis of a trajectory determined from the linear motion pattern of the toy car 901, and the initial tracking data to thereby generate calculated position and motion data. The user input process continues to monitor the steering input panel 905 and receives steering input data. Combining the calculated position and motion data with the steering input data, the AR-process renders the race track 921 at virtual world coordinates that have been moved according to the calculated position and motion data and rotated according to the steering input data, such that the toy car 901 is presented to be steered further along the race track 921. The digital race game can thus be completed, despite a loss of tracking, on the basis of calculated positon and motion data.

### Example 2 - curved motion (projectile motion)

Referring back to Fig.6, an example of a reference toy adapted for a curved motion pattern is shown, e.g. an air plane or rocket launched by a rubber band mechanism, powered by a reactive force resulting from the expulsion of a fluid, a thrown toy, or a similar launching or propulsion mechanism to drive the toy forward in a characteristic curved line of a known type, such as in a projectile type motion pattern. As for example 1, the example AR process may be considered in five stages as follows.

In a first stage, object recognition running on a computing device tracks the moving toy following a specific trajectory. Using computer vision analysis of each camera frame, the process locates the toy object in each image. This is represented by the solid markers 15 in Fig.6.

In a second stage, when the toy object is too far away to represent enough pixels in the captured image frames to be analysed and found, a tracking process may fail. This behaviour is indicated by a data point 13 with a cross in Fig.6.

In a third stage, the process performs an assessment of the correctness of the tracking result, e.g. based on one or more predetermined reliability criteria for the tracking. In the present example, it the process corrects the erroneous tracking result, by replacing the motion data obtained from the tracking algorithm, and considered as unreliable according to the reliability criteria, by calculated motion data that follow a specific curved trajectory. The calculated motion data is represented by the hollow markers 16 in Fig.6.

In a fourth stage, the specific curved trajectory of the tracked toy may be determined based on the initial, reliable motion tracking data and knowledge on the type of motion pattern to be expected for the particular launching or propulsion mechanism. As the velocity, the heading of the toy object and the type of path it will take are known, as well as the position when tracking is lost, the process can perform vector calculations to give a convincing impression of where the toy may end up. This is further represented by the hollow markers in Fig.6. For example, the characteristic motion pattern for the particular toy (and associated digital game experience as selected by the user) may be formulated as a parametrized function (e.g. a parabolic function descriptive of a projectile motion), and parameters for a specific curved trajectory according to this motion pattern may be determined on the basis of the initial tracking data. The calculated values may also be stored and eventually replace those that were registered based on the object.

In a fifth stage, a steering experience may be added. Since the process is now able to determine and extend the specific curved trajectory of the moving toy object, the process may add further movement to the virtual world, through relative motion with respect to the tracked toy object. In response to steering input from the user, the virtual world is counter-rotated in the AR-enhanced view displayed on the AR-system, i.e. the virtual world objects shown on top of the real world view are rotated in a direction opposite to the steering input from the user. Thereby, a steering experience from the point of view of the toy object is generated. For example, the steering input may be for controlling pitch, roll and yaw of the toy object in a virtual world. The process can thus simulate steering of the toy object as it flies around virtual world objects by rotating the virtual world coordinates around corresponding pitch, roll, and yaw rotation axes passing through the toy object, instead of physically steering the toy object itself.

## Claims

1. Toy system comprising:
a moveable real-world object (1), wherein the moveable real-world object is adapted to move with respect to a real-world scene (8) according to a characteristic motion pattern;
an image capturing device (4) adapted to capture image data of the real-world scene (8); and
a processing unit operatively connected to the image capture device for receiving captured image data, wherein the processing unit is configured to:
- recognize the moveable real-world object;
- attribute an augmented reality target (12) to the moveable real-world object;
- track the augmented reality target in captured image data of the real-world scene, so as to obtain tracking data for the augmented reality target, the tracking data comprising actual position data and actual motion data (15) for the augmented reality target;
the toy system further comprising a display (3) operatively connected to the processing device and adapted to render the augmented reality content according to the updated position and motion data of the augmented reality target;
**characterized in that** the processing device is further configured to:
- determine a trajectory of the augmented reality target according to the characteristic motion pattern, based on the actual position and motion data;
- determine whether a loss of tracking of the augmented reality target has occurred;
- update position and motion data of the augmented reality target with calculated position and motion data (16) according to the trajectory, in case a loss of tracking has occurred, and otherwise
- update position and motion data of the augmented reality target with the actual position and motion data according to the tracking data;
- generate augmented reality content associated with the moveable real-world object according to the updated position and motion data of the augmented reality target.

2. Toy system according to claim 1, wherein generating augmented reality content associated with the moveable real world object comprises defining virtual world objects (21) at virtual world coordinates (20) with respect to the updated position of the augmented reality target; and transforming the virtual world coordinates with respect to the updated augmented reality target position by an opposite vector of a motion vector (14), thereby representing a movement of the real world object in respect of the virtual world objects according to the motion of the real world object.

3. Toy system according to claim 2, wherein the toy system further comprises a user input device (5) operatively connected to the processing device and configured to obtain user steering input; and wherein generating augmented reality content associated with the moveable real world object further comprises rotating the virtual world coordinates with respect to the augmented reality target by applying a rotation opposite to the user steering input around a corresponding steering axis (S) passing through the updated augmented reality target position, thereby representing steering of the movement of the real world object in respect of the virtual world objects according to the user steering input.

4. Toy system according to any one of the preceding claims, wherein the characteristic motion pattern is provided as a mathematical function and/or as parameters, thereby defining a type and/or a shape of the motion pattern.

5. Toy system according to any one of the preceding claims, wherein the characteristic motion includes one or more of linear motion, oscillatory motion, rotational motion, circular motion, elliptic motion, parabolic motion, projectile motion, and a motion following a pre-determined specified trajectory or path.

6. Toy system according to any one of the preceding claims, wherein parameters defining the characteristic motion include one or more of: a direction of motion, speed, acceleration.

7. Toy system according to any one of the preceding claims, wherein the toy system further comprises a propulsion mechanism for propelling the real-world object according to the characteristic motion pattern.

8. Toy system according to claim 7, wherein the propulsion mechanism comprises an internal propulsion mechanism adapted to drive the moveable real-world object, or wherein the propulsion mechanism comprises an external propulsion mechanism adapted to launch the moveable real-world object.

9. Toy system according to claim 7 or claim 8, wherein the propulsion mechanism comprises a trigger device.

10. Toy system according to any one of the preceding claims, wherein the real-world object is a toy construction model constructed from modular construction elements.

11. Toy system according to any one of the preceding claims, wherein the real world object is a toy vehicle model adapted to only travel in a straight line.

12. An augmented reality user device (2) for use in a toy system according to any of the preceding claims, the augmented reality user device being adapted to provide augmented reality content associated with a moveable real-world object (1), wherein the moveable real-world object is adapted to move with respect to a real-world scene (8) according to a characteristic motion pattern, the augmented reality user device comprising:
an image capturing device (4) adapted to capture image data of the real-world scene;
a processing unit operatively connected to the image capture device for receiving captured image data, wherein the processing unit is configured to:
- recognize the moveable real-world object;
- attribute an augmented reality target (12) to the moveable real-world object;
- track the augmented reality target (12) in captured image data of the real-world scene, so as to obtain tracking data for the augmented reality target, the tracking data comprising actual position data and actual motion data (15) for the augmented reality target;
- generate augmented reality content associated with the moveable real-world object according to the updated position and motion data of the augmented reality target;
wherein the user device further comprises a display (3) operatively connected to the processing device and adapted to render the augmented reality content according to the updated position and motion data of the augmented reality target, **characterized in that** the processing unit is further configured to:
- determine a trajectory of the augmented reality target (12) according to the characteristic motion pattern, based on the actual position and motion data (15);
- determine whether a loss of tracking of the augmented reality target has occurred;
- update position and motion data of the augmented reality target with calculated position and motion data (16) according to the trajectory, in case a loss of tracking has occurred; and otherwise
- update position and motion data of the augmented reality target with the actual position and motion data according to the tracking data.

13. Augmented reality user device according to claim 12, wherein generating augmented reality content associated with the moveable real world object comprises defining virtual world objects (21) at virtual world coordinates (20) with respect to the position of the augmented reality target; and transforming the virtual world coordinates with respect to the augmented reality target position by an opposite vector of a motion vector (14), thereby representing a movement of the real world object in respect of the virtual world objects according to the motion of the real world object.

14. Augmented reality user device according to claim 13, wherein the user device further comprises a user input device (5) operatively connected to the processing device and configured to obtain user steering input; and wherein generating augmented reality content associated with the moveable real world object further comprises rotating the virtual world coordinates with respect to the augmented reality target by applying a rotation opposite to the user steering input around a corresponding steering axis (S) passing through the updated augmented reality target position, thereby representing steering of the movement of the real world object in respect of the virtual world objects according to the user steering input.

15. A method of providing augmented reality content associated with a moveable real-world object, wherein the moveable real-world object is adapted to move with respect to a real-world scene according to a characteristic motion pattern, the method comprising the steps of:
- recognizing a moveable real world object;
- attributing an augmented reality target to the moveable real-world object;
- providing captured image data of the moveable real-world object moving in the real-world scene;
- tracking the augmented reality target in the captured image data of the real-world scene, so as to obtain tracking data, the tracking data comprising actual position data and actual motion data indicative of an actual motion of the moveable real-world object with respect to the real-world scene;
**characterized in that** the method further comprises the steps of:
- determining a trajectory of the augmented reality target according to the characteristic motion pattern, based on the actual position and motion data;
- determining whether a loss of tracking of the augmented reality target has occurred;
- updating position and motion data of the augmented reality target with calculated position and motion data according to the trajectory, in case a loss of tracking has occurred; and otherwise
- updating position and motion data of the augmented reality target with the actual position and motion data according to the tracking data;
- generating augmented reality content associated with the moveable real-world object according to the updated position and motion data of the augmented reality target; and
- rendering the augmented reality content according to the updated position and motion data of the augmented reality target.

## Patentansprüche

1. Spielzeugsystem, umfassend:
ein bewegliches Realwelt-Objekt (1), wobei das bewegliche Realwelt-Objekt angepasst ist, sich in Bezug auf eine Realwelt-Szene (8) gemäß einem charakteristischen Bewegungsmuster zu bewegen;
eine Bilderfassungsvorrichtung (4), die angepasst ist, Bilddaten der Realwelt-Szene (8) zu erfassen; und
eine Verarbeitungseinheit, die betriebsfähig mit der Bilderfassungsvorrichtung verbunden ist, um erfasste Bilddaten zu empfangen, wobei die Verarbeitungseinheit konfiguriert ist zum:
- Erkennen des beweglichen Realwelt-Objekts;
- Zuordnen eines Ziels (12) der erweiterten Realität zu dem beweglichen Realwelt-Objekt;
- Verfolgen des Ziels der erweiterten Realität in erfassten Bilddaten der Realwelt-Szene, um Verfolgungsdaten für das Ziel der erweiterten Realität zu erhalten, wobei die Verfolgungsdaten Ist-Positionsdaten und Ist-Bewegungsdaten (15) für das Ziel der erweiterten Realität umfassen;
wobei das Spielzeugsystem weiter eine Anzeige (3) umfasst, die betriebsfähig mit der Verarbeitungsvorrichtung verbunden und angepasst ist, um den Inhalt der erweiterten Realität gemäß den aktualisierten Positions- und Bewegungsdaten des Ziels der erweiterten Realität zu rendern;
**dadurch gekennzeichnet, dass** die Verarbeitungsvorrichtung weiter konfiguriert ist zum:
- Bestimmen einer Trajektorie des Ziels der erweiterten Realität gemäß dem charakteristischen Bewegungsmuster, auf der Grundlage der Ist-Positions- und -Bewegungsdaten;
- Bestimmen, ob ein Verlust der Verfolgung des Ziels der erweiterten Realität eingetreten ist;
- Aktualisieren von Positions- und Bewegungsdaten des Ziels der erweiterten Realität mit berechneten Positions- und Bewegungsdaten (16) gemäß der Trajektorie, für den Fall, dass ein Verlust der Verfolgung aufgetreten ist, und andernfalls
- Aktualisieren der Positions- und Bewegungsdaten des Ziels der erweiterten Realität mit den Ist-Positions- und -Bewegungsdaten gemäß den Verfolgungsdaten;
- Generieren des Inhalts der erweiterten Realität, der mit dem beweglichen Realwelt-Objekt verknüpft ist, gemäß den aktualisierten Positions- und Bewegungsdaten des Ziels der erweiterten Realität.

2. Spielzeugsystem nach Anspruch 1, wobei Generieren von Inhalt der erweiterten Realität, der mit dem beweglichen Realwelt-Objekt verknüpft ist, Definieren von Virtuellwelt-Objekten (21) an Virtuellwelt-Koordinaten (20) in Bezug auf die aktualisierte Position des Ziels der erweiterten Realität; und Umwandeln der Virtuellwelt-Koordinaten in Bezug auf die aktualisierte Position des Ziels der erweiterten Realität durch einen Gegenvektor eines Bewegungsvektors (14) umfasst, wodurch eine Bewegung des Realwelt-Objekts in Bezug auf die Virtuellwelt-Objekte gemäß der Bewegung des Realwelt-Objekts dargestellt wird.

3. Spielzeugsystem nach Anspruch 2, wobei das Spielzeugsystem weiter eine Benutzereingabevorrichtung (5) umfasst, die betriebsfähig mit der Verarbeitungsvorrichtung verbunden ist und konfiguriert ist, um eine Benutzersteuereingabe zu erhalten; und wobei Generieren von Inhalt der erweiterten Realität, der mit dem beweglichen Realwelt-Objekt verknüpft ist, weiter Drehen der Virtuellwelt-Koordinaten in Bezug auf das Ziel der erweiterten Realität umfasst, indem eine Drehung entgegengesetzt zur Benutzersteuereingabe um eine entsprechende Steuerachse (S) angewendet wird, die durch die aktualisierte Zielposition der erweiterten Realität verläuft, wodurch Steuerung der Bewegung des Realwelt-Objekts in Bezug auf die Virtuellwelt-Objekte gemäß der Benutzersteuereingabe dargestellt wird.

4. Spielzeugsystem nach einem der vorstehenden Ansprüche, wobei das charakteristische Bewegungsmuster als eine mathematische Funktion und/oder als Parameter bereitgestellt wird, wodurch eine Art und/oder eine Form des Bewegungsmusters definiert wird.

5. Spielzeugsystem nach einem der vorstehenden Ansprüche, wobei die charakteristische Bewegung eine oder mehrere von linearer Bewegung, oszillierender Bewegung, drehbarer Bewegung, kreisförmiger Bewegung, elliptischer Bewegung, parabolischer Bewegung, Projektilbewegung und einer Bewegung, die einer vorgegebenen Trajektorie oder Bahn folgt, beinhaltet.

6. Spielzeugsystem nach einem der vorstehenden Ansprüche, wobei Parameter, die die charakteristische Bewegung definieren, einen oder mehrere beinhalten von: Richtung der Bewegung, Geschwindigkeit, Beschleunigung.

7. Spielzeugsystem nach einem der vorstehenden Ansprüche, wobei das Spielzeugsystem weiter einen Antriebsmechanismus umfasst, um das Realwelt-Objekt entsprechend dem charakteristischen Bewegungsmuster anzutreiben.

8. Spielzeugsystem nach Anspruch 7, wobei der Antriebsmechanismus einen internen Antriebsmechanismus umfasst, der angepasst ist, um das bewegliche Realwelt-Objekt anzutreiben, oder wobei der Antriebsmechanismus einen externen Antriebsmechanismus umfasst, der angepasst ist, um das bewegliche Realwelt-Objekt zu starten.

9. Spielzeugsystem nach Anspruch 7 oder Anspruch 8, wobei der Antriebsmechanismus eine Auslösevorrichtung umfasst.

10. Spielzeugsystem nach einem der vorstehenden Ansprüche, wobei das Realwelt-Objekt ein aus modularen Bauelementen aufgebautes Spielzeug-Konstruktionsmodell ist.

11. Spielzeugsystem nach einem der vorstehenden Ansprüche, wobei das Realwelt-Objekt ein Spielzeugfahrzeugmodell ist, das angepasst ist, um nur in einer geraden Linie zu fahren.

12. Benutzervorrichtung (2) der erweiterten Realität zur Verwendung in einem Spielzeugsystem nach einem der vorstehenden Ansprüche, wobei die Benutzervorrichtung der erweiterten Realität angepasst ist, um Inhalt der erweiterten Realität bereitzustellen, der mit einem beweglichen Realwelt-Objekt (1) verknüpft ist, wobei das bewegliche Realwelt-Objekt angepasst ist, um sich in Bezug auf eine Realwelt-Szene (8) gemäß einem charakteristischen Bewegungsmuster zu bewegen, wobei die Benutzervorrichtung der erweiterten Realität umfasst:
eine Bilderfassungsvorrichtung (4), die angepasst ist, Bilddaten der Realwelt-Szene zu erfassen;
eine Verarbeitungseinheit, die betriebsfähig mit der Bilderfassungsvorrichtung verbunden ist, um erfasste Bilddaten zu empfangen, wobei die Verarbeitungseinheit konfiguriert ist zum:
- Erkennen des beweglichen Realwelt-Objekts;
- Zuordnen eines Ziels (12) der erweiterten Realität zu dem beweglichen Realwelt-Objekt;
- Verfolgen des Ziels der erweiterten Realität (12) in erfassten Bilddaten der Realwelt-Szene, um Verfolgungsdaten für das Ziel der erweiterten Realität zu erhalten, wobei die Verfolgungsdaten Ist-Positionsdaten und Ist-Bewegungsdaten (15) für das Ziel der erweiterten Realität umfassen;
- Generieren des Inhalts der erweiterten Realität, der mit dem beweglichen Realwelt-Objekt verknüpft ist, gemäß den aktualisierten Positions- und Bewegungsdaten des Ziels der erweiterten Realität;
wobei die Benutzervorrichtung ferner eine Anzeige (3) umfasst, die operativ mit der Verarbeitungsvorrichtung verbunden und angepasst ist, um den Inhalt der erweiterten Realität gemäß den aktualisierten Positions- und Bewegungsdaten des Ziels der erweiterten Realität zu rendern, **dadurch gekennzeichnet, dass** die Verarbeitungseinheit weiter konfiguriert ist zum:
- Bestimmen einer Trajektorie des Ziels (12) der erweiterten Realität gemäß dem charakteristischen Bewegungsmuster, auf der Grundlage der Ist-Positions- und -Bewegungsdaten (15);
- Bestimmen, ob ein Verlust der Verfolgung des Ziels der erweiterten Realität eingetreten ist;
- Aktualisieren der Positions- und Bewegungsdaten des Ziels der erweiterten Realität mit berechneten Positions- und Bewegungsdaten (16) gemäß der Trajektorie, falls ein Verlust der Verfolgung aufgetreten ist; und andernfalls
- Aktualisieren der Positions- und Bewegungsdaten des Ziels der erweiterten Realität mit den Ist-Positions- und -Bewegungsdaten gemäß den Verfolgungsdaten.

13. Benutzervorrichtung der erweiterten Realität nach Anspruch 12, wobei Generieren von Inhalt der erweiterten Realität, der mit dem beweglichen Realwelt-Objekt verknüpft ist, Definieren von Virtuellwelt-Objekten (21) an Virtuellwelt-Koordinaten (20) in Bezug auf die Position des Ziels der erweiterten Realität; und Umwandeln der Virtuellwelt-Koordinaten in Bezug auf die Position des Ziels der erweiterten Realität durch einen Gegenvektor eines Bewegungsvektors (14) umfasst, wodurch eine Bewegung des Realwelt-Objekts in Bezug auf die Virtuellwelt-Objekte gemäß der Bewegung des Realwelt-Objekts dargestellt wird.

14. Benutzervorrichtung der erweiterten Realität nach Anspruch 13, wobei die Benutzervorrichtung weiter eine Benutzereingabevorrichtung (5) umfasst, die betriebsfähig mit der Verarbeitungsvorrichtung verbunden ist und konfiguriert ist, um eine Benutzersteuereingabe zu erhalten; und wobei Generieren von Inhalt der erweiterten Realität, der mit dem beweglichen Realwelt-Objekt verknüpft ist, weiter Drehen der Virtuellwelt-Koordinaten in Bezug auf das Ziel der erweiterten Realität durch Anwenden einer Drehung entgegengesetzt zur Benutzersteuereingabe um eine entsprechende Steuerachse (S) umfasst, die durch die aktualisierte Zielposition der erweiterten Realität verläuft, wodurch Steuerung der Bewegung des Realwelt-Objekts in Bezug auf die Virtuellwelt-Objekte gemäß der Benutzersteuereingabe dargestellt wird.

15. Verfahren zum Bereitstellen von Inhalt der erweiterten Realität, der mit einem beweglichen Realwelt-Objekt verknüpft ist, wobei das bewegliche Realwelt-Objekt angepasst ist, um sich in Bezug auf eine Realwelt-Szene gemäß einem charakteristischen Bewegungsmuster zu bewegen, wobei das Verfahren die folgenden Schritte umfasst:
- Erkennen eines beweglichen Realwelt-Objekts;
- Zuordnen eines Ziels der erweiterten Realität zu dem beweglichen Realwelt-Objekt;
- Bereitstellen erfasster Bilddaten des beweglichen Realwelt-Objekts, das sich in der Realwelt-Szene bewegt;
- Verfolgen des Ziels der erweiterten Realität in den erfassten Bilddaten der Realwelt-Szene, um Verfolgungsdaten zu erhalten, wobei die Verfolgungsdaten Ist-Positionsdaten und Ist-Bewegungsdaten umfassen, die eine Ist-Bewegung des beweglichen Realwelt-Objekts in Bezug auf die Realwelt-Szene anzeigen;
**dadurch gekennzeichnet, dass** das Verfahren weiter die Schritte umfasst zum:
- Bestimmen einer Trajektorie des Ziels der erweiterten Realität gemäß dem charakteristischen Bewegungsmuster, auf der Grundlage der Ist-Positions- und - Bewegungsdaten;
- Bestimmen, ob ein Verlust der Verfolgung des Ziels der erweiterten Realität eingetreten ist;
- Aktualisieren der Positions- und Bewegungsdaten des Ziels der erweiterten Realität mit berechneten Positions- und Bewegungsdaten gemäß der Trajektorie, falls ein Verlust der Verfolgung aufgetreten ist; und andernfalls
- Aktualisieren der Positions- und Bewegungsdaten des Ziels der erweiterten Realität mit den Ist-Positions- und -Bewegungsdaten gemäß den Verfolgungsdaten;
- Generieren von Inhalt der erweiterten Realität, der mit dem beweglichen Realwelt-Objekt verknüpft ist, gemäß den aktualisierten Positions- und Bewegungsdaten des Ziels der erweiterten Realität; und
- Rendern des Inhalts der erweiterten Realität gemäß den aktualisierten Positions- und Bewegungsdaten des Ziels der erweiterten Realität.

## Revendications

1. Système de jouet comprenant :
un objet mobile du monde réel (1), dans lequel l'objet mobile du monde réel est adapté pour se déplacer par rapport à une scène du monde réel (8) selon un motif de mouvement caractéristique ;
un dispositif de capture d'images (4) adapté pour capturer des données d'image de la scène du monde réel (8) ; et
une unité de traitement connectée de manière opérationnelle au dispositif de capture d'images pour recevoir des données d'image capturées, dans lequel l'unité de traitement est configurée pour :
- reconnaître l'objet mobile du monde réel ;
- attribuer une cible de réalité augmentée (12) à l'objet mobile du monde réel ;
- suivre la cible de réalité augmentée dans les données d'image capturées de la scène du monde réel de manière à obtenir des données de suivi pour la cible de réalité augmentée, les données de suivi comprenant des données de position réelles et des données de mouvement réelles (15) pour la cible de réalité augmentée ;
le système de jouet comprenant en outre un écran (3) connecté de manière opérationnelle au dispositif de traitement et adapté pour restituer le contenu de réalité augmentée selon les données de position et de mouvement mises à jour de la cible de réalité augmentée ;
**caractérisé en ce que** le dispositif de traitement est en outre configuré pour :
- déterminer une trajectoire de la cible de réalité augmentée selon le motif de mouvement caractéristique, sur la base des données de position et de mouvement réelles ;
- déterminer si une perte de suivi de la cible de réalité augmentée s'est produite ;
- mettre à jour des données de position et de mouvement de la cible de réalité augmentée avec des données de position et de mouvement calculées (16) selon la trajectoire, au cas où une perte de suivi se serait produite, et sinon
- mettre à jour des données de position et de mouvement de la cible de réalité augmentée avec les données de position et de mouvement réelles selon les données de suivi ;
- générer un contenu de réalité augmentée associé à l'objet mobile du monde réel selon les données de position et de mouvement mises à jour de la cible de réalité augmentée.

2. Système de jouet selon la revendication 1, dans lequel la génération de contenu de réalité augmentée associé à l'objet mobile du monde réel comprend la définition d'objets du monde virtuel (21) à des coordonnées du monde virtuel (20) par rapport à la position mise à jour de la cible de réalité augmentée ; et la transformation des coordonnées du monde virtuel par rapport à la position mise à jour de la cible de réalité augmentée par un vecteur opposé d'un vecteur de mouvement (14), représentant ainsi un mouvement de l'objet du monde réel par rapport aux objets du monde virtuel selon le mouvement de l'objet du monde réel.

3. Système de jouet selon la revendication 2, dans lequel le système de jouet comprend en outre un dispositif d'entrée utilisateur (5) connecté de manière opérationnelle au dispositif de traitement et configuré pour obtenir une entrée de direction utilisateur ; et dans lequel la génération de contenu de réalité augmentée associé à l'objet mobile du monde réel comprend en outre la rotation des coordonnées du monde virtuel par rapport à la cible de réalité augmentée en appliquant une rotation opposée à l'entrée de direction utilisateur autour d'un axe de direction (S) correspondant passant par la position mise à jour de la cible de réalité augmentée, représentant ainsi la direction du mouvement de l'objet du monde réel par rapport aux objets du monde virtuel selon l'entrée de direction utilisateur.

4. Système de jouet selon l'une quelconque des revendications précédentes, dans lequel le motif de mouvement caractéristique est fourni sous la forme d'une fonction mathématique et/ou en tant que paramètres, définissant ainsi un type et/ou une forme du motif de mouvement.

5. Système de jouet selon l'une quelconque des revendications précédentes, dans lequel le mouvement caractéristique inclut un ou plusieurs parmi un mouvement linéaire, un mouvement oscillatoire, un mouvement de rotation, un mouvement circulaire, un mouvement elliptique, un mouvement parabolique, un mouvement de projectile et un mouvement suivant une trajectoire ou un trajet spécifié prédéterminé.

6. Système de jouet selon l'une quelconque des revendications précédentes, dans lequel des paramètres définissant le mouvement caractéristique incluent une ou plusieurs parmi : une direction de mouvement, une vitesse, une accélération.

7. Système de jouet selon l'une quelconque des revendications précédentes, dans lequel le système de jouet comprend en outre un mécanisme de propulsion pour propulser l'objet du monde réel selon le motif de mouvement caractéristique.

8. Système de jouet selon la revendication 7, dans lequel le mécanisme de propulsion comprend un mécanisme de propulsion interne adapté pour entraîner l'objet mobile du monde réel, ou dans lequel le mécanisme de propulsion comprend un mécanisme de propulsion externe adapté pour lancer l'objet mobile du monde réel.

9. Système de jouet selon la revendication 7 ou la revendication 8, dans lequel le mécanisme de propulsion comprend un dispositif de déclenchement.

10. Système de jouet selon l'une quelconque des revendications précédentes, dans lequel l'objet du monde réel est un modèle de construction de jouet construit à partir d'éléments de construction modulaires.

11. Système de jouet selon l'une quelconque des revendications précédentes, dans lequel l'objet du monde réel est un modèle de véhicule jouet adapté pour se déplacer uniquement en ligne droite.

12. Dispositif utilisateur de réalité augmentée (2) destiné à être utilisé dans un système de jouet selon l'une quelconque des revendications précédentes, le dispositif utilisateur de réalité augmentée étant adapté pour fournir un contenu de réalité augmentée associé à un objet mobile du monde réel (1), dans lequel l'objet mobile du monde réel est adapté pour se déplacer par rapport à une scène du monde réel (8) selon un motif de mouvement caractéristique, le dispositif utilisateur de réalité augmentée comprenant :
un dispositif de capture d'images (4) adapté pour capturer des données d'image de la scène du monde réel ;
une unité de traitement connectée de manière opérationnelle au dispositif de capture d'images pour recevoir des données d'image capturées, dans lequel l'unité de traitement est configurée pour :
- reconnaître l'objet mobile du monde réel ;
- attribuer une cible de réalité augmentée (12) à l'objet mobile du monde réel ;
- suivre la cible de réalité augmentée (12) dans des données d'image capturées de la scène du monde réel, de manière à obtenir des données de suivi pour la cible de réalité augmentée, les données de suivi comprenant des données de position réelles et des données de mouvement réelles (15) pour la cible de réalité augmentée ;
- générer un contenu de réalité augmentée associé à l'objet mobile du monde réel selon les données de position et de mouvement mises à jour de la cible de réalité augmentée ;
dans lequel le dispositif utilisateur comprend en outre un écran (3) connecté de manière opérationnelle au dispositif de traitement et adapté pour restituer le contenu de réalité augmentée selon les données de position et de mouvement mises à jour de la cible de réalité augmentée, **caractérisé en ce que** l'unité de traitement est en outre configurée pour :
- déterminer une trajectoire de la cible de réalité augmentée (12) selon le motif de mouvement caractéristique, sur la base des données de position et de mouvement réelles (15) ;
- déterminer si une perte de suivi de la cible de réalité augmentée s'est produite ;
- mettre à jour des données de position et de mouvement de la cible de réalité augmentée avec des données de position et de mouvement calculées (16) selon la trajectoire, au cas où une perte de suivi se serait produite ; et sinon
- mettre à jour des données de position et de mouvement de la cible de réalité augmentée avec les données de position et de mouvement réelles selon les données de suivi.

13. Dispositif utilisateur de réalité augmentée selon la revendication 12, dans lequel la génération de contenu de réalité augmentée associé à l'objet mobile du monde réel comprend la définition d'objets du monde virtuel (21) à des coordonnées du monde virtuel (20) par rapport à la position de la cible de réalité augmentée ; et la transformation des coordonnées du monde virtuel par rapport à la position de la cible de réalité augmentée par un vecteur opposé d'un vecteur de mouvement (14), représentant ainsi un mouvement de l'objet du monde réel par rapport aux objets du monde virtuel selon le mouvement de l'objet du monde réel.

14. Dispositif utilisateur de réalité augmentée selon la revendication 13, dans lequel le dispositif utilisateur comprend en outre un dispositif d'entrée utilisateur (5) connecté de manière opérationnelle au dispositif de traitement et configuré pour obtenir une entrée de direction utilisateur ; et dans lequel la génération de contenu de réalité augmentée associé à l'objet mobile du monde réel comprend en outre la rotation des coordonnées du monde virtuel par rapport à la cible de réalité augmentée en appliquant une rotation opposée à l'entrée de direction utilisateur autour d'un axe de direction (5) correspondant passant par la position mise à jour de la cible de réalité augmentée, représentant ainsi la direction du mouvement de l'objet du monde réel par rapport aux objets du monde virtuel selon l'entrée de direction utilisateur.

15. Procédé de fourniture de contenu de réalité augmentée associé à un objet mobile du monde réel, dans lequel l'objet mobile du monde réel est adapté pour se déplacer par rapport à une scène du monde réel selon un motif de mouvement caractéristique, le procédé comprenant les étapes de :
- la reconnaissance d'un objet mobile du monde réel ;
- l'attribution d'une cible de réalité augmentée à l'objet mobile du monde réel ;
- la fourniture de données d'image capturées de l'objet mobile du monde réel se déplaçant dans la scène du monde réel ;
- le suivi de la cible de réalité augmentée dans les données d'image capturées de la scène du monde réel, de manière à obtenir des données de suivi, les données de suivi comprenant des données de position réelles et des données de mouvement réelles indiquant un mouvement réel de l'objet mobile du monde réel par rapport à la scène du monde réel ;
**caractérisé en ce que** le procédé comprend en outre les étapes de :
- détermination d'une trajectoire de la cible de réalité augmentée selon le motif de mouvement caractéristique, sur la base des données de position et de mouvement réelles ;
- la détermination établissant qu'une perte de suivi de la cible de réalité augmentée s'est ou non produite ;
- la mise à jour de données de position et de mouvement de la cible de réalité augmentée avec des données de position et de mouvement calculées selon la trajectoire, au cas où une perte de suivi se serait produite ; et sinon
- la mise à jour de données de position et de mouvement de la cible de réalité augmentée avec les données de position et de mouvement réelles selon les données de suivi ;
- la génération de contenu de réalité augmentée associé à l'objet mobile du monde réel selon les données de position et de mouvement mises à jour de la cible de réalité augmentée ; et
- la restitution du contenu de réalité augmentée selon les données de position et de mouvement mises à jour de la cible de réalité augmentée.
